# EUROPÄISCHE PATENTSCHRIFT

(11) **EP 1 086 865 B1**
(45) Veröffentlichungstag und Bekanntmachung des Hinweises auf die Patenterteilung: **08.09.2004**
(21) Anmeldenummer: 00119462.0
(22) Anmeldetag: 15.09.2000
(51) Int. Cl.: B60S 1/04

(54) **Befestigungsanordnung für eine Scheibenwischeranlage**
Mounting device for a windscreen wiper system
Dispositif de fixation pour un système d'essuie-glace

(30) Priorität: 22.09.1999 DE 19945367
(43) Veröffentlichungstag der Anmeldung: 28.03.2001
(73) Patentinhaber: Volkswagen Aktiengesellschaft, 38436 Wolfsburg (DE)
(72) Erfinder: Ostrowski, Wolfgang, 38446 Wolfsburg (DE)

(56) Entgegenhaltungen:
- DE-A- 19 642 672
- FR-A- 2 667 833
- FR-A- 2 742 113
- GB-A- 2 228 188

## Beschreibung

Die Erfindung betrifft eine Befestigungsanordnung für eine Scheibenwischeranlage an einer Fahrzeugkarosserie, insbesondere für eine Frontwischeranlage mit einem Übertragungsgestänge.

Scheibenwischeranlagen mit einem Übertragungsgestänge weisen vorteilhafter- und üblicherweise einen am Fahrzeugkörper anordbaren Trägerrahmen mit einem aus einem vormontierten Antriebsmotor, einem Getriebe und einer Antriebskurbel bestehenden Antrieb und in der Regel zwei im Abstand zur Antriebskurbel angeordnete Lagerböcke auf, in denen jeweils eine Antriebswelle für einen Wischerarm angeordnet ist, mit der ein Schwenkhebel drehfest verbunden ist. Der Antriebsmotor und das Getriebe sind bevorzugt zwischen den Lagerböcken angeordnet, können aber auch im Bereich einer der Lagerböcke angeordnet sein. Die Antriebskurbel ist durch ein Gestänge gelenkig mit dem jeweiligen Schwenkhebel verbunden. Eine derartig vormontierte Scheibenwischeranlage ist/ wird als Baueinheit mit dem Trägerrahmen an der Fahrzeugkarosserie befestigt, wobei dieser an wenigstens zwei auseinanderliegenden Stellen, insbesondere an den Lagerböcken, und an einer dritten Stelle im Bereich zwischen diesen und im Abstand von deren Verbindungslinie mit der Fahrzeugkarosserie verbunden ist, derart, daß die durch die Wischerbewegung hervorgerufenen Reaktionskräfte aufgenommen werden können und eine Schwenkbewegung des Trägerrahmens um eine durch die beiden Lagerböcke bestimmte Achse unterbleibt (Drehmomentenabstützung).

Derartige Befestigungsanordnungen, bei denen der Antriebsmotor entweder über ein mit dem Trägerrahmen verschweißtes oder mit speziellen Mitteln verschraubtes Halteblech oder eine Konsole an einem Trägerrahmen oder auch direkt an der Fahrzeugkarosserie angeordnet sind, sind beispielsweise aus den Dokumenten DOS 2 052 139, DE 44 09 957 A1 und DE 195 25 553 A1 bekannt.

Gegenstand der DE 196 42 672 A1 ist eine Rohrplatine für eine Wischeranlage als Trägerrahmen für mindestens ein Wischerlager und einem aus einem Antriebsmotor, einem Getriebe und einer Antriebskurbel bestehenden Wischerantrieb, wobei die Antriebskurbel über ein Gestänge mit einem drehfest an einer im Wischerlager gelagerten Wischerwelle angeordneten Schwenkhebei gelenkig verbunden ist. Der Trägerrahmen ist an zwei Befestigungspunkten an der Fahrzeugkarosserie festgelegt und über einen dritten Befestigungspunkt zwischen diesen und im Abstand von deren Verbindungslinie über ein Halteblech abgestützt. Diese greift dabei mit einem Dämpfungselement am Antriebsmotor an und ist mit der Rohrplatine verschraubt oder verschweißt oder auf bzw. in einem entsprechenden Aufnahmesitz gesteckt oder geklemmt.

Bei den aus Aluminium oder Magnesium gefertigten Leichtbau-Scheibenwischeranlagen ist eine Schweißung problematisch, und eine Befestigung des Antriebsmotors über spezielle Verschraubungen ist aufwendig.

Es ist deshalb Aufgabe der Erfindung, eine Befestigungsanordnung für eine Scheibenwischeranlage der vorbeschriebenen Art nach dem Oberbegriff des Anspruchs 1 aufwandsreduziert zu gestalten.

Diese Aufgabe wird bei einer Befestigungsanordnung mit den Merkmalen des Anspruchs 1 durch dessen kennzeichnende Merkmale gelöst. Vorteilhafte Ausgestaltungen sind in den Unteransprüchen aufgeführt.

Die Erfindung besteht darin, daß bei einer Scheibenwischeranlage, die in bekannter Weise einen an einer Fahrzeugkarosserie anordbaren Trägerrahmen für einen aus einem Antriebsmotor, einem Getriebe und einer Antriebskurbel bestehenden Antrieb und für mindestens einen Lagerbock für einen Wischerarm mit einer Antriebswelle und ein Übertragungsgestänge zwischen der Antriebskurbel und einem drehfest an der Antriebswelle angeordneten Schwenkhebel aufweist, und bei der der Trägerrahmen in bekannter Weise an zwei Befestigungspunkten an der Fahrzeugkarosserie festgelegt und ein dritter Befestigungspunkt über ein am Antriebsmotor befestigtes Halteblech im Abstand von der Verbindungslinie der Befestigungspunkte an der Fahrzeugkarosserie vorgesehen ist, die Befestigungsschrauben für das Getriebe am Polgehäuse zugleich die Befestigungsschrauben für das Halteblech sind. Damit ist die Befestigungsanordnung vorteilhaft vereinfacht, und eine Drehmomentenabstützung ist sichergestellt.

Bei dieser Befestigungsanordnung entfällt somit eine problematische Verschweißung des Haltebleches mit einem Al- oder Mg-Trägerrahmen. Wenn der Trägerrahmen ein durch eine Innenhochdruckumformung hergestelltes Rohr-Formteil mit integrierten Lagerböcken ist, werden vorteilhaft spezielle Rohr-Schraubverbindungen vermieden. Die Vorteile der Befestigungsanordnung liegen auch in einer Gewichtsreduzierung und in einer Montageerleichterung, verbunden mit einer Aufwandsreduzierung.

Dabei kann der dritte Befestigungspunkt als schwingungs- und geräuschgedämpfte Steckverbindung mit einem Steckverbindungselement für ein an der Fahrzeugkarosserie angeordnetes Gegenstück ausgebildet sein, wobei die Steckrichtung im wesentlichen quer zur Rotationsachse der Antriebskurbel gegeben sein sollte. Damit ist eine zuverlässige Drehmomentabstützung bzw. zuverlässige Aufnahme der durch die Scheibenwischerbewegung verursachten Reaktionskräfte des mit den vorstehend genannten Antriebselementen bestückten Trägerrahmenss gegeben, so daß Schwenkbewegungen des Trägerrahmens um eine durch die beiden ersten Befestigungspunkte bestimmte Achse verhindert werden.

Bevorzugt ist das Steckverbindungselement eine Steckbuchse aus einem elastischen Dämpfungsmaterial, insbesondere Gummi, für einen an der Fahrzeugkarosserie angeordneten Steh(Steck-)bolzen. Zur Erleichterung des Steckvorganges ist die Steckbuchse karosserieseitig mit einer konischen Einführöffnung versehen.

Die Erfindung wird nachstehend an einem Ausführungsbeispiel erläutert. In der zugehörigen Zeichnung zeigen, im wesentlichen schematisch
- Fig. 1:: eine Ansicht von einem Trägerrahmen mit an diesem vormontierten Antriebsteilen,
- Fig. 2:: eine Draufsicht auf den Trägerrahmen und
- Fig. 3:: die Anordnung des Haltebleches am Polgehäuse eine Wischermotors.

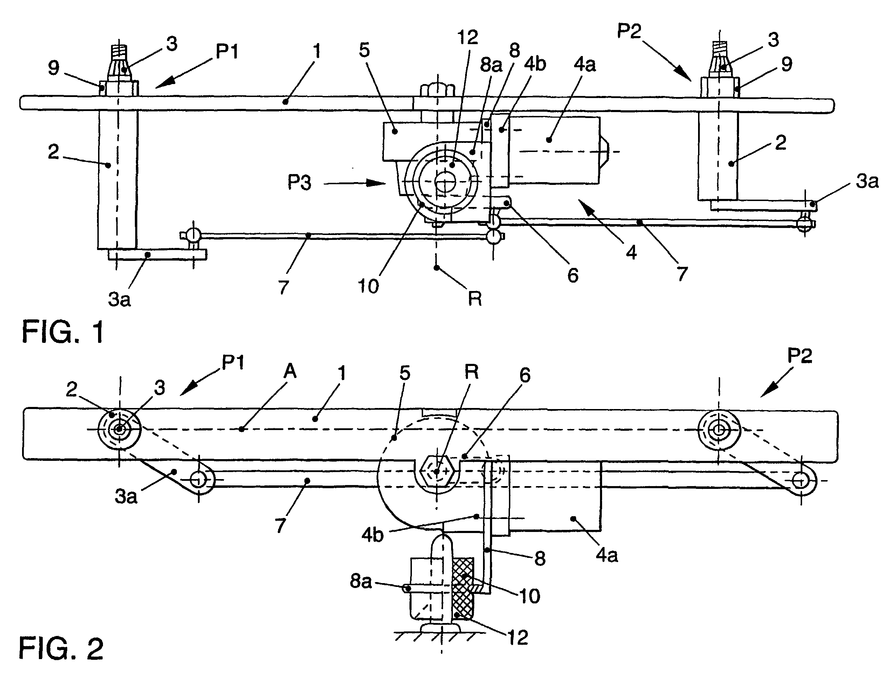

In Fig. 1 ist ein Trägerrahmen mit zwei Lagerböcken 2 für jeweils eine Antriebswelle 3 für einen Wischerarm und mit einem vormontierten Wischermotor 4 mit einem Getriebe 5, einer mit dieser verbundenen Antriebskurbel 6 und einem Antriebsgestänge 7 dargestellt, wobei dieses an der Antriebskurbel 6 und jeweils an einem an der jeweiligen Antriebswelle 3 drehfest angeordneten Schwenkhebel 3a angelenkt ist. Am Polgehäuse 4a des Wischermotors 4 ist ein Halteblech 8 befestigt, wobei die Befestigungsschrauben 4b (nicht dargestellt) für das Getriebe 5 am Polgehäuse 4a zugleich die Befestigungsschrauben für das Halteblech 8 sind.

Die Baueinheit weist drei Befestigungspunkte P1 bis P3 auf. Zwei Befestigungspunkte P1 und P2 sind durch die Lagerböcke 2 gegeben, die oberhalb des Trägerrahmens 1 mit einem Außengewinde 9 für eine Schraubverbindung mit der Fahrzeugkarosserie versehen sind. Der dritte Befestigungspunkt P3 ist über eine Abwinklung 8a des Haltebleches 8, und somit im Bereich zwischen den ersten beiden Befestigungspunkten und im Abstand von der Längsachse A des Trägerrahmens 1 (Fig. 2) an der Fahrzeugkarosserie gegeben. Dieser dritte Befestigungspunkt ist als Steckverbindungselement ausgebildet, wobei die Steckrichtung quer zur Rotationsachse R der Antriebskurbel 6 gegeben ist. Das Steckverbindungselement ist eine aus Gummi bestehende Steckbuchse 10 für einen an der Fahrzeugkarosserie fest angeordneten Steckbolzen 11.

Fig. 2 zeigt die Befestigungsanordnung in der Draufsicht, in der insbesondere die Anordnung und Gestaltung der Steckbuchse 10 zu erkennen sind. Diese ist ein dickwandiger zylindrischer Gummikörper, der in der Mitte seiner Mantelfläche eine umlaufende Nur zur Anordnung in einer kreisrunden Ausnehmung an der Abwinklung 8a des Haltebleches 8 aufweist. Karosseriewandseitig weist die Steckbuchse 10 eine konische Einführöffnung 12 für den Steckbolzen 11 auf, wobei die zylinderförmige Stecköffnung für diesen einen geringeren Durchmesser als derselbe (11) hat, um einen festen elastischen Sitz der Steckverbindung sicherzustellen.

Die dargestellte Baueinheit wird an der Fahrzeugkarosserie montiert, indem zunächst die Steckbuchse 10 auf den Steckbolen 11 gedrückt wird, wobei unter radialer Kompression des Gummikörpers eine elastische Verbindung geschaffen wird. Anschließend werden die beiden Lagerböcke 2 in Öffnungen im Karosserieblech (nicht dargestellt) positioniert und mit einer Schraubverbindung festgelegt.

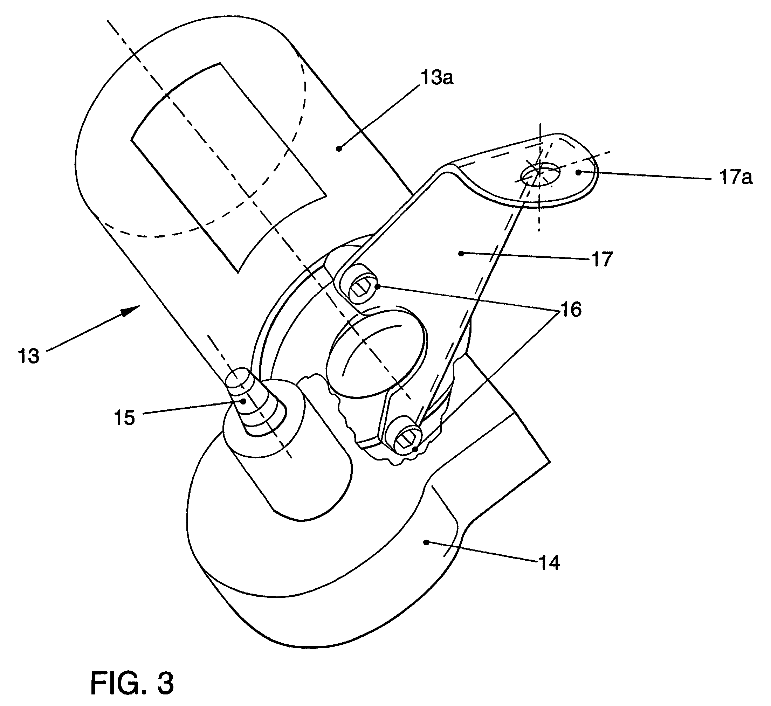

Fig. 3 zeigt einen aus einem Wischermotor 13 und einem Getriebe 14 bestehenden Antrieb für die Scheibenwischeranlage. Das Getriebe 14 weist eine Abtriebswelle 15 zum Antrieb einer nicht dargestellten Antriebskurbel für ein Antriebsgestänge auf. An den Befestigungsschrauben 16 für das Getriebe 14 am Polgehäuse 13a ist zugleich ein Halteblech 17 mit einer Abwinklung 17a angeschraubt. Diese Abwinklung 17a bildet einen dritten Befestigungspunkt P3 für die Scheibenwischeranlage an der Karosserie aus, wenn die dargestellte Einheit mit ihrem Lager für die Antriebswelle 15 am Trägerrahmen 1 fest angeordnet ist.

### BEZUGSZEICHENLISTE

- 1: Trägerrahmen
- 2: Lagerbock
- 3: Antriebswelle
- 3a: Schwenkhebel
- 4: Wischermotor
- 4a: Polgehäuse
- 4b: Befestigungsschraube
- 5: Getriebe
- 6: Antriebskurbel
- 7: Antriebsgestänge
- 8: Halteblech
- 8a: Abwinklung
- 9: Außengewinde
- 10: Steckbuchse
- 11: Steckbolzen
- 12: Einführöffnung
- 13: Wischermotor
- 13a: Polgehäuse
- 14: Getriebe
- 15: Antriebswelle
- 16: Befestigungsschraube
- 17: Halteblech
- 17a: Abwinklung
- A: Achse
- R: Rotationsachse
- P1: Befestigungspunkt
- P2: Befestigungspunkt
- P3: Befestigungspunkt

## Patentansprüche

1. Befestigungsanordnung für eine Scheibenwischeranlage, die einen an einer Fahrzeugkarosserie anordbaren Trägerrahmen (1) für einen aus einem Antriebsmotor (4, 13) mit Polgehäuse (4a, 13a) einem Getriebe (5, 14) und einer Antriebskurbel (6) bestehenden Antrieb und für mindestens einen Lagerbock (2) für einen Wischerarm mit einer Antriebswelle (3) aufweist, wobei die Antriebskurbel (6) über ein Gestänge (7) mit einem drehfest an der Antriebswelle (3) angeordneten Schwenkhebel (3a) gelenkig verbunden ist, und wobei der Trägerrahmen (1) an zwei Befestigungspunkten (P1, P2) an der Fahrzeugkarosserie festgelegt und ein dritter Befestigungspunkt (P3) im Abstand von deren Verbindungslinie (A) vorgesehen ist, wobei der dritte Befestigungspunkt (P3) über ein Halteblech (8, 17) an der Fahrzeugkarosserie gegeben ist, das am Antriebsmotor (4, 13) befestigt ist, **dadurch gekennzeichnet, daß** die Befestigungsschrauben (4b, 16) für das Getriebe am Polgehäuse (4a, 13a) zugleich die Befestigungsschrauben (4b, 16) für das Halteblech (8, 17) sind.

2. Befestigungsanordnung nach Anspruch 1, **dadurch gekennzeichnet, daß** der dritte Befestigungspunkt (P3) als schwingungs- und geräuschgedämpfte Steckverbindung mit einem Steckverbindungselement (10) für ein an der Fahrzeugkarosserie fest angeordnetes Gegenstück (11) ausgebildet ist.

3. Befestigungsanordnung nach Anspruch 2, **dadurch gekennzeichnet, daß** das Steckverbindungselement (10) eine Steckbuchse aus einem elastischen Dämpfungsmaterial und das Gegenstück (11) ein an der Fahrzeugkarosserie angeordneter Steckbolzen (11) ist.

4. Befestigungsanordnung nach Anspruch 1, **dadurch gekennzeichnet, daß** der Trägerrahmen (1) ein durch eine Innenhochdruckumformung hergestelltes Formteil mit integrierten Lagerböcken ist.

## Claims

1. Arrangement for fastening a wiper system, the arrangement having a support frame (1), which can be arranged on a vehicle body and is intended for a drive comprising a driving motor (4, 13) with a stator (4a, 13a), a gear mechanism (5, 14) and a driving crank (6) and for at least one mount (2) for a wiper arm with a drive shaft (3), the driving crank (6) being connected in an articulated manner via a linkage (7) to a pivot lever (3a), which is arranged in a rotationally fixed manner on the drive shaft (3), and the support frame (1) being fixed on the vehicle body at two fastening points (P1, P2) and a third fastening point (P3) being provided at a distance from their connecting line (A), the third fastening point (P3) being provided on the vehicle body via a retaining plate (8, 17) which is fastened to the driving motor (4, 13), **characterized in that** the fastening screws (4b, 16) for the gear mechanism on the stator (4a, 13a) are at the same time the fastening screws (4b, 16) for the retaining plate (8, 17).

2. Fastening arrangement according to Claim 1, **characterized in that** the third fastening point (P3) is designed as a vibration- and noise-damped plug connection having a plug connection element (10) for a counterpart (11) arranged fixedly on the vehicle body.

3. Fastening arrangement according to Claim 2, **characterized in that** the plug connection element (10) is a plug socket consisting of an elastic damping material and the counterpart (11) is a plug-in pin (11) arranged on the vehicle body.

4. Fastening arrangement according to Claim 1, **characterized in that** the support frame (1) is a shaped part which is produced by internal high-pressure forming and has integrated mounts.

## Revendications

1. Agencement de fixation pour un système d'essuie-glace, lequel agencement présente un cadre de support (1) qui peut être installé sur la carrosserie d'un véhicule, pour un entraînement constitué d'un moteur d'entraînement (4, 13) doté d'un stator (4a, 13a), d'une transmission (5, 14) et d'une manivelle d'entraînement (6), et pour au moins un porte-palier (2) d'un bras d'essuie-glace doté d'un arbre d'entraînement (3), la manivelle d'entraînement (6) étant reliée de manière articulée par l'intermédiaire d'une tringlerie (7) à un levier pivotant (3a) disposé à rotation solidaire sur l'arbre d'entraînement (3), le cadre de support (1) étant fixé sur la carrosserie du véhicule en deux points de fixation (P1, P2), un troisième point de fixation (P3) étant prévu à distance de la ligne (A) qui relie les deux précédents, le troisième point de fixation (P3) étant défini par une tôle de maintien (8, 17) qui est prévue sur la carrosserie du véhicule et qui est fixée au moteur d'entraînement (4, 13), **caractérisé en ce que** les vis de fixation (4b, 16) de la transmission sur le stator (4a, 13a) sont en même temps les vis de fixation (4b, 16) de la tôle de maintien (8, 17).

2. Agencement de fixation selon la revendication 1, **caractérisé en ce que** le troisième point de fixation (P3) est configuré comme liaison enfichable à oscillations et bruit amortis, avec un élément de liaison enfichable (10) pour une pièce complémentaire (11) disposée fixement sur la carrosserie du véhicule.

3. Agencement de fixation selon la revendication 2, **caractérisé en ce que** l'élément à liaison enfichable (10) est une douille enfichable constituée d'un matériau élastique d'amortissement, la pièce complémentaire (11) étant un boulon d'enfichage (11) disposé sur la carrosserie du véhicule.

4. Agencement de fixation selon la revendication 1, **caractérisé en ce que** le cadre de support (1) est une pièce façonnée fabriquée par façonnage à haute pression interne et à laquelle un porte-palier est intégré.
